# EUROPEAN PATENT APPLICATION

(11) **EP 3 954 988 A1**
(43) Date of publication of application: **16.02.2022**
(21) Application number: 20787333.2
(22) Date of filing: 08.04.2020
(51) Int. Cl.: G01N 30/96, G01N 30/34, B01D 15/36, B01D 15/16, G01N 30/64, G01N 30/88

(54) **ION-EXCHANGE CHROMATOGRAPHY SYSTEM FOR ANALYZING ELECTROLYTE SOLUTION, METHOD OF QUANTITATIVE ANALYSIS OF LITHIUM SALTS IN ELECTROLYTE SOLUTION, AND PREPARATION METHOD FOR ELECTROLYTE SOLUTION USING SAME**

(30) Priority: 08.04.2019 KR 20190040887
(71) Applicant: Soulbrain Co., Ltd., Seongnam-si, Gyeonggi-do 13486 (KR)
(72) Inventor: JO, Dong-Ho, Seongnam-si Gyeonggi-do 13486 (KR); YU, Sung Kyun, Seongnam-si Gyeonggi-do 13486 (KR)
(74) Representative: Dehns
(86) International application number: PCT/KR2020/004781
(87) International publication number: WO 2020/209615

(57) **Abstract**

The present invention relates to an ion-exchange chromatography system for analyzing an electrolyte solution, a method of quantitative analysis of lithium salts in an electrolyte solution, and a preparation method for an electrolyte solution using same. According to the present invention, there is an effect of providing an ion-exchange chromatography system for analyzing an electrolyte solution, which enables a plurality of lithium salts to be quantified in the end product of the electrolyte solution without incomplete separation or interference due to additives so as to drastically reduce an adjusting lead time, can eliminate an interim inspection step, thus drastically increasing productivity, and has dramatically improved production output management, analytical reliability, and customer satisfaction. In addition, the present invention provides a method of quantitative analysis of lithium salts in an electrolyte solution, and a preparation method for an electrolyte solution using same.

## Description

### [Technical Field]

The present invention relates to an ion-exchange chromatography system for analysis of an electrolyte, a method for quantitative analysis of lithium salt in the electrolyte, and a method for manufacturing an electrolyte using the same. More specifically, the present invention relates to an ion-exchange chromatography system for analysis of an electrolyte and a method for quantitative analysis of lithium salts in the electrolyte, which can quantify a plurality of lithium salts in a final electrolyte product without interference of additives, so that an adjustment lead time may be greatly reduced, an intermediate inspection step may be omitted to greatly improve productivity, and production capacity management, analytical reliability and customer satisfaction may be remarkably improved, as well as a preparation method of electrolytes using the same.

### [Background Art]

With recent expansion of the electric vehicle market and advancements in energy storage devices, the battery-related industry is expected to grow continuously, and therefore, an increase in supply of electrolyte products is also expected.

A lithium secondary battery is representative of the above batteries, and demand therefor is rapidly increasing. A lithium secondary battery is a battery that stores DC power by repetitive operations of charging and discharging, supplies electricity to the outside as needed, and has a configuration in which a positive electrode and a negative electrode are located in the same container filled with an electrolyte with a separator interposed therebetween. The positive and negative electrodes are formed by binding a mixture of an active material, a conductive agent and a binder, etc., to a current collector, and the active material functions as a chemical substance for generating and outputting electrical energy to an external circuit.

Since the electrolyte has direct effects on the efficiency of the battery, and its performance is greatly affected by temperature, composition, concentration, presence/absence and amounts of impurities, etc., it is necessary to prepare the electrolyte under optimized conditions. Further, the prepared electrolyte should be confirmed to satisfy optimization conditions.

Among the optimization conditions of the electrolyte, the content of metal salts is particularly important. As a method for quantitative analysis of the metal salt components, conventional inductively coupled plasma-optical emission spectrometry (ICP-OES), high-performance liquid chromatography (HPLC), nuclear magnetic resonance (NMR), and the like have been used.

However, in the case of an inductively coupled plasma spectrometer, although the metal salts introduced in the intermediate step could be quantified, the metal salts contained in the final electrolyte are difficult to accurately analyze due to limitations in the analysis method or due to non-separation or interference of additives. Further, liquid chromatography entails a limitation in that only some components are detectable, while nuclear magnetic resonance has a problem in that accurate quantitative analysis is difficult because mixed data is obtained.

Therefore, there is now an urgent need for development of a new quantitative analysis method of electrolyte components with advantages in that: all metal salts to be measured in the final electrolyte product can be separated; since interference of other additives is excluded, a plurality of intermediate inspection steps may be omitted; reliability of analysis can be greatly improved.

### [Prior Art Literature]

### [Patent Literature]

Korean Patent Laid-Open Publication No. 2010-0096907

### [Disclosure]

### [Technical Problem]

In order to solve the problems of the prior art as described above, an object of the present invention is to provide an ion-exchange chromatography system for analysis of an electrolyte and a method for quantitative analysis of lithium salts in the electrolyte, which can quantify a plurality of lithium salts in a final electrolyte product without interference of additives, so that an adjustment lead time is greatly reduced, any intermediate inspection step may be omitted to greatly improve productivity, and production capacity management, analytical reliability and customer satisfaction may be remarkably improved, as well as a method for preparation of electrolytes using the same.

All of the above and other objects of the present invention may be achieved by the present invention described below.

### [Technical Solution]

In order to achieve the above object, the present invention provides a system for separating and quantifying a plurality of lithium salts contained in an electrolyte, which may include an ion-exchange column, a mobile phase and a detector, wherein the mobile phase includes 1 to 10 millimolar concentration (mM) of sodium carbonate (NaCO₃), 0.5 to 8 mM of sodium hydrogen carbonate (NaHCO₃), 15 to 40% by weight (wt.%) of acetonitrile (ACN), and the balance of water.

In the present description, the detector is not particularly limited if it is an electrochemical detector or a spectroscopy detector commonly used in the art, to which the present invention pertains, but is preferably an electrical conductivity detector, thereby achieving effects of easy, economical, rapid precise quantification of lithium salts.

Further, the present invention provides a method for quantitative analysis of lithium salts in an electrolyte, which includes: i) preparing a standard electrolyte solution; ii) calibrating the standard electrolyte solution using the ion-exchange chromatography system of claim 1; and iii) quantifying an electrolyte sample using the ion-exchange chromatography system.

Further, the present invention provides a method for preparing electrolytes, including use of the ion-exchange chromatography system.

### [Advantageous effects]

As described above, according to the present invention, there are provided an ion-exchange chromatography system for analysis of an electrolyte and a method for quantitative analysis of lithium salts in the electrolyte, with advantages, in which: a plurality of lithium salts in a final electrolyte product can be quantified without interference of additives; an adjustment lead time is greatly reduced; an intermediate inspection step may be omitted, thereby greatly improving productivity; and production capacity management, analytical reliability and customer satisfaction may be remarkably improved, as well as a method for preparation of electrolytes using the same.

### [Description of Drawings]

FIG. 1 is a chromatogram of the conductivity detector provided in Example 3.
FIG. 2 is a chromatogram of the conductivity detector provided in Example 5.
FIG. 3 is a comparative chromatogram of a conductivity detector formed by adjusting only temperature conditions of an ion-exchange column to 20°C and 40 °C, respectively, with respect to Example 3.

### [Best Mode]

Hereinafter, an ion-exchange chromatography system for analysis of an electrolyte, a method for quantitative analysis of lithium salts in the electrolyte and a method for preparing electrolytes using the same will be described in detail.

The present inventors have found that, if a mobile phase including sodium carbonate (NaCO₃), sodium hydrogen carbonate (NaHCO₃), acetonitrile (ACN) and water in a predetermined weight ratio to a given ion-exchange chromatography system, the content of a plurality of lithium salts could be accurately analyzed without overlapping of ions or interference of additives, therefore, further research was devoted to complete the present invention based on the above result.

The ion-exchange chromatography system of the present invention is a system for separating and quantifying a plurality of lithium salts contained in an electrolyte, and may include an ion-exchange column, a mobile phase and an electrical conductivity detector, wherein the mobile phase includes 1 to 10 millimolar concentration (mM) of sodium carbonate (NaCO₃). 0.5 to 8 mM of sodium hydrogen carbonate (NaHCO₃), 15 to 40 wt.% of acetonitrile (ACN) and the balance of water. In this case, the plurality of lithium salts in a final electrolyte product may be quantified without overlapping of ions or interference of additives, while greatly reducing an adjustment lead time and omitting any intermediate inspection step so as to greatly improve productivity. Further, management of production capacity, analytical reliability and customer satisfaction may also be remarkably improved.

Hereinafter, components constituting the ion-exchange chromatography system of the present disclosure will be described in detail as follows.

The plurality of lithium salts may include, for example, two or more selected from the group consisting of LiPO₂F₂, LiBF₄, LiBOB and LiPF₆, preferably includes all thereof. In this case, the content of most or all of lithium salts usable in the final electrolyte product is measurable, and therefore, any intermediate inspection step may be omitted while greatly improving analytical reliability or the final electrolyte product.

The electrical conductivity detector is not particularly limited so long as it is an electrical conductivity detector usable in the technical field to which the present invention pertains.

The ion-exchange column may be, for example, an anion-exchange column, preferably an ion-exchange column including a quaternary ammonium ligand in a stationary phase, and most preferably a SHODEX SI-50 4E column. In this case, accurate and reproducible quantitative analysis results are obtainable because of excellent isolation performance for ions to be measured and possible exclusion of interference of additives.

The mobile phase may include, for example, 3.5 to 4.5 mM of sodium carbonate (NaCO₃), 2.5 to 3.5 mM of sodium hydrogen carbonate (NaHCO₃), 25 to 30 wt.% of acetonitrile (ACN) and the balance of water, preferably 3.7 to 4.3 mM of sodium carbonate, 2.7 to 3.3 mM of sodium hydrogen carbonate, 26 to 29 wt.% of acetonitrile and the balance of water, most preferably 3.9 to 4.1 mM of sodium carbonate, 2.9 to 3.1 mM of sodium hydrogen carbonate, 27 to 29 wt.% of acetonitrile and the balance of water. Further, within these ranges, a plurality of metal salts, especially Li salts in the final electrolyte product may be quantified while avoiding interference of additives, whereby the adjustment lead time may be greatly reduced while remarkably improving the analytical reliability and customer satisfaction.

The method for quantitative analysis of lithium salts in the electrolyte according to the present invention may include: i) preparing a standard electrolyte solution; ii) calibrating the standard electrolyte solution using the ion-exchange chromatography system of claim 1; and iii) quantifying an electrolyte sample using the ion-exchange chromatography system. According to these steps, it is possible to accurately measure the content of a plurality of lithium salts in the final electrolyte product without interference of additives so that all intermediate inspection steps may be omitted, thereby achieving effects of remarkably improving productivity, easy management of production capacity, analytical reliability and customer satisfaction.

According to the present disclosure, the electrolyte standard solution is a reagent containing exactly known components and amounts thereof, and may be used as a standard when calculating an amount of lithium salts in an electrolyte sample. Specifically, this solution may be produced by firstly preparing an electrolyte reference solution in a correct amount, and then mass-diluting the solution to a concentration similar to that of the electrolyte sample.

According to the present disclosure, calibration refers to measuring the components and amounts thereof in the standard solution, which is a standard for measurement, by the corresponding analysis method, wherein a calibration curve is drawn to identify correlation between the concentration of the standard solution and a signal intensity of the detector.

According to the present disclosure, quantification means determining components of the electrolyte sample and amounts thereof by the same analysis method as the standard solution. After measuring the electrolyte sample, a concentration thereof may be calculated based on the signal value measured on the basis of the calibration curve, thereby confirming the amount of each component.

The electrolyte standard solution may include, for example, a solution obtained by firstly mass-diluting the electrolyte standard solution by 5 to 15 times with an electrolyte solvent and then secondly mass-diluting the diluted solution by 30 to 300 times with a mobile phase, preferably a solution obtained by firstly mass-diluting the electrolyte standard solution by 7 to 13 times with the electrolyte solution and then secondly mass-diluting the diluted solution by 50 to 250 times with the mobile phase, and more preferably a solution obtained by firstly mass-diluting the electrolyte standard solution by 9 to 11 times with the electrolyte solvent and then secondly mass-diluting the diluted solution by 80 to 200 times with the mobile phase. Within the above ranges, interference of additives may be excluded, thereby effectively inducing accurate results for the content of lithium salt to be measured in the final electrolyte product.

According to the present disclosure, "mass dilution" refers to diluting a solution by adding a solvent in an amount corresponding to a multiple of the mass of the solution, which is a different concept from "volume dilution" that dilutes a solution by introducing a solvent in an amount corresponding to a multiple of the volume of the solution. Herein, "multiples" may be positive real numbers or integers. When mass dilution is adopted in the present invention, a standard deviation compared to the volume dilution may be greatly reduced, thereby remarkably improving analytical precision and reliability.

As another example, the lithium salt quantitative analysis method of the present invention may further include storing the diluted solution obtained by firstly mass-diluting the electrolyte reference solution at 4 °C or less, preferably 0 to 4 °C, more preferably 2 to 4 °C. Within the above range, it is possible to obtain a reproducible and precise result value for the content of lithium salt to be measured in the final electrolyte product.

The electrolyte reference solution may include, for example two or more lithium salts selected from the group consisting of LiPO₂F₂, LiBF₄, LiBOB and LiPF₆, and preferably includes all thereof. In this case, the content of most or all of lithium salts available in the final electrolyte product can be measured, and therefore, any intermediate inspection step may be omitted while greatly improving analytical reliability for the final electrolyte product.

The electrolyte solvent may include, for example, one or more selected from the group consisting of ethylene carbonate (EC), diethyl carbonate (DEC), dimethyl carbonate (DMC) and ethylmethyl carbonate (EMC), and preferably a mixed solvent including EC, DEC and EMC. In this case, there is an effect of obtaining a reproducible and precise result value for the content of lithium salt to be measured in the final electrolyte product while achieving excellent electrolyte performance.

The electrolyte standard solution may further include an additive which is or may be included in the electrolyte sample. For example, one or more among silyl borate-based compounds and organic halophosphino-based compounds may be included. In this case, there is an effect of obtaining a reproducible and precise result value for the content of lithium salt to be measured in the final electrolyte product while achieving excellent electrolyte performance.

As the electrolyte sample, for example, an electrolyte mass-diluted by 500 times to 1500 times with a mobile phase may be used. Preferably, the electrolyte mass-diluted by 700 times to 1300 times, and more preferably 900 to 1100 times with a mobile phase may be used. Within these ranges, a reproducible and precise result value for the content of lithium salt to be measured in the electrolyte sample may be obtained.

Components contained in the electrolyte standard solution and components included in the electrolyte sample may be similar, preferably the same. In this case, there is an effect of obtaining a reproducible and precise result value for the content of lithium salt to be measured in the electrolyte sample.

A temperature of the column in the calibration step (ii) may be in the range of, for example, 15 to 45 °C, preferably 18 to 30 °C, more preferably 18 to 25 °C. Within these ranges, there is no significant difference in analysis depending on temperature, while achieving easy analysis effects.

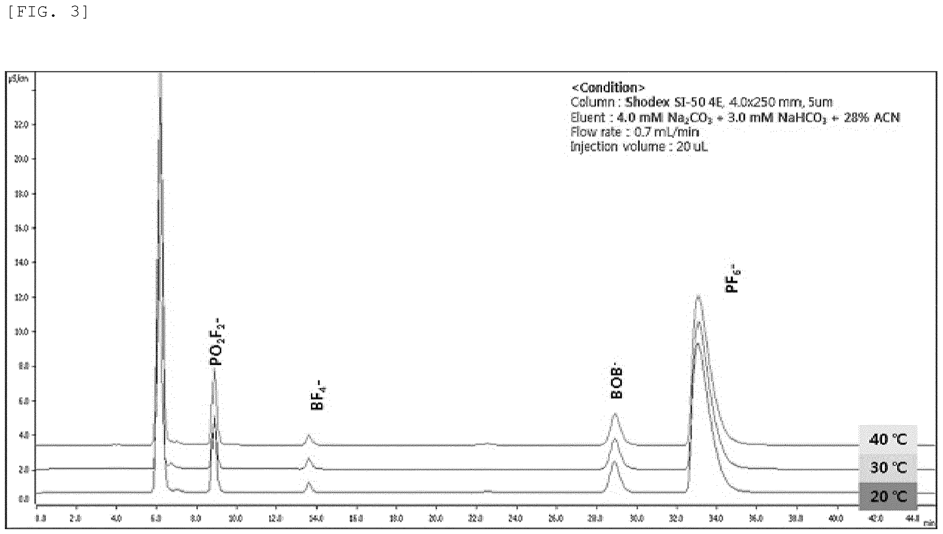

FIG. 3 illustrates results of the same experiments except that the temperature conditions of the ion-exchange column in Example 3 were set to 20°C and 40°C, respectively, wherein substantially no significant difference in analysis with respect to the temperature conditions on the spectrum could be confirmed.

The method for preparation of an electrolyte according to the present invention is characterized by involving the ion-exchange chromatography system described above. In this case, a plurality of lithium salts in the final electrolyte product could be quantified without interference of additives, whereby an adjustment lead time greatly reduces and any intermediate inspection step may be omitted, so as to greatly improve productivity, while remarkably improving production capacity management, analytical reliability and customer satisfaction.

The method for preparation of electrolyte may include, for example, the method for quantitative analysis of lithium salt in the electrolyte described above.

A sample injection device, column conditions, a suppressor, IC consumables, IC accessories and other quantitative analysis methods not described herein are not particularly limited as long as they are adoptable in the art to which the present invention pertains, and may be appropriately selected based on functions and requirements.

Hereinafter, preferred embodiments and drawings are proposed to support understanding of the present invention, but the following examples and drawings are merely illustrative of the present invention, and various changes and modifications are possible within the scope and spirit of the present invention to those skilled in the art. It is duly understood and obvious that such changes and modifications are within the scope of the appended claims.

### [Example]

### <Preparation of electrolyte>

A silyl borate-based compound and an organic halophosphino-based compound as additives in a total amount of 0.1 to 10 wt.%, as well as lithium salts such as LiPF₆ and LiBF₄ in a total amount of 0.6 to 2M were introduced to an organic solvent in which ethylene carbonate (EC), ethylmethyl carbonate (EMC) and diethyl carbonate (DEC) are mixed in a volume ratio of 3:5:2 in a washed tank, followed by mixing the same so as to prepare a first stage metal salt solution.

To the first stage metal salt solution, 0.01 to 5 wt.% of LiPO₂F₂ and 0.1 to 5 wt.% of fluoroethylene carbonate (FEC) were introduced and mixed, thereby preparing a second stage metal salt solution.

To the second stage metal salt solution, 0.1 to 3 wt.% of LiBOB was added and mixed, thereby preparing a final electrolyte product.

### Comparative Example 1

The first stage metal salt solution, the second stage metal salt solution and the final electrolyte product were subjected to quantitative analysis by the method described in Table 1 below, and results thereof are shown in Table 1 below. The following elemental analysis was performed using an inductively coupled plasma-optical emission spectrometer (ICP-OES).

**[TABLE 1]**

| Section | Sample | Analysis method | Adjustment time (h) |
|---|---|---|---|
| Comparative Example 1 | First step metal salt solution | 1) Sampling and Li, B element analysis 2) LiBF₄ content calculation 3) Others converted to LiPF₆ | One |
| | Second stage metal salt solution | 1) Sampling and Li element analysis 2) Converted to LiPO₂F₂ | 44.5 |
| | Final electrolyte product | 1) Total analysis and B element analysis¹⁾ 2) Conversion to LiBOB | 100 |
| | Total adjustment time | | 145.5 |

| | | | |
|---|---|---|---|
| ¹⁾ Impossible to separate and analyze lithium salts in the final electrolyte product. | | | |

As shown in Table 1 above, in the case where an electrolyte product is subjected to quantitative analysis using the conventional elemental analysis method (Comparative Example 1), there is a problem in that a specific element represents the content of only each lithium salt. Further, quantitative analysis is required whenever a raw material is introduced, thus extending a production time of the electrolyte product. Further, re-validation for each lithium salt in the final electrolyte product is impossible. In addition, it was confirmed that, even if a problem is found in the final product, it cannot be readjusted.

### Examples 1 to 5

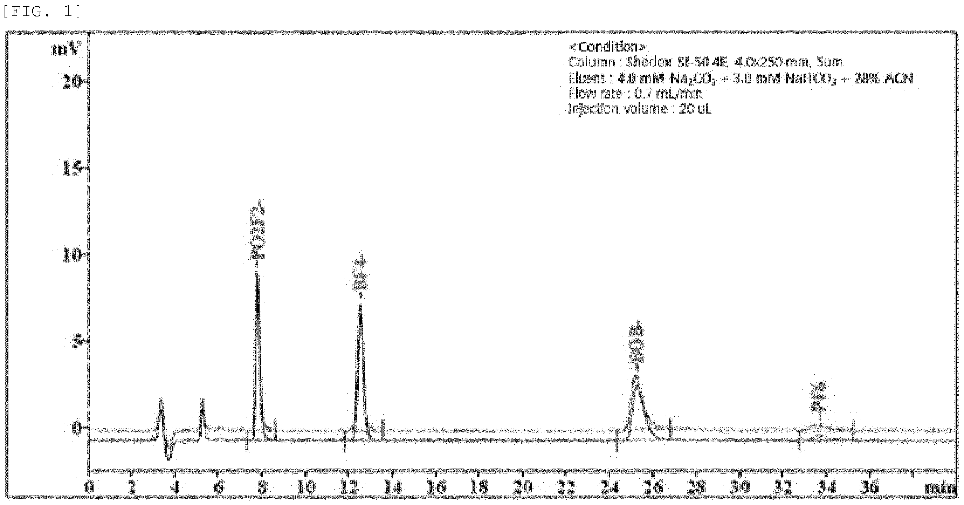

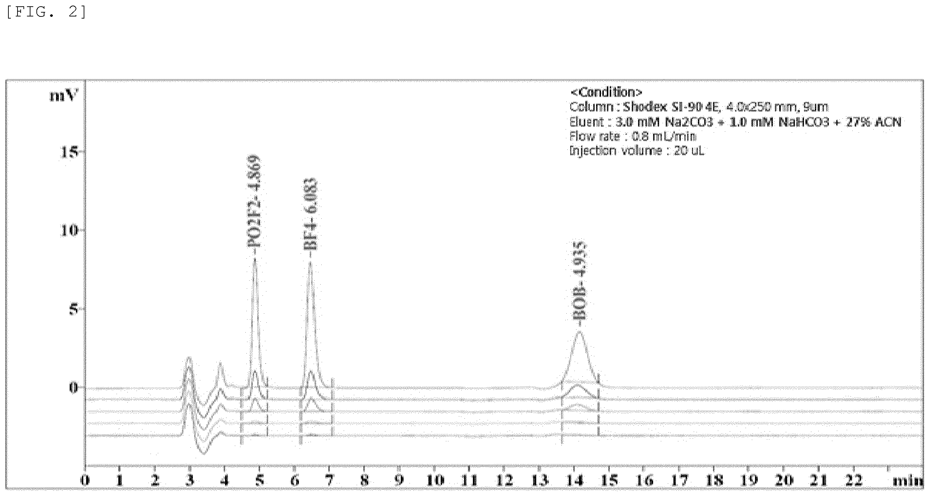

The above prepared electrolyte product was subjected to quantitative analysis using an anion exchange chromatography analyzer coupled with an electric conductivity detector (940 Profic IC, manufactured by Metrohm) under the conditions described in Table 2 below, and results thereof are shown in Table 2 below and illustrated in FIGS. 1 and 2.

From the following results, whether ions are separated or not means whether or not peaks overlap between ions to be measured; whether there is interference or not means whether ion peaks to be measured are interfered with the additives rather than ions of the lithium salts; a case where 2 to 3 ions among ions such as PO₂F₂, BOB⁻, FF₄⁻, PF₆⁻, etc. were separated without overlapping is evaluated by Δ; a case where all ions such as PO₂F₂⁻, BOB⁻, BF₄- and PF₆⁻, etc. were separated is evaluated by O; a case where 2 to 3 ions among ions such as PO₂F₂⁻, BOB⁻, BF₄- and PF₆⁻, etc. were not interfered with additives or the like is evaluated by Δ; and a case where all ions such as PO₂F₂⁻, BOB⁻, BF₄- and PF₆⁻, etc. were not interfered with additives or the like is evaluated by X.

**[TABLE 2]**

| Section | Column (Temperature 30°C) | Eluent conce ntration | | | Separated or not | Interfered or not |
|---|---|---|---|---|---|---|
| | | Na₂CO₃ | NaHCO₃ | ACN(wt%) | | |
| Example 1 | SI-50 4E | 3.0 mM | 2.0 mM | 28% | O | Δ |
| Example 2 | | 3.0 mM | 3.0 mM | 28% | O | X |
| Example 3 | | 4.0 mM | 3.0 mM | 28% | O | X |
| Example 4 | | 5.0 mM | 3.0 mM | 28% | Δ | Δ |
| Example 5 | SI-90 4E | 3.0 mM | 1.0 mM | 27% | Δ | Δ |

As shown in Table 1, when the electrolyte is subjected to quantitative analysis using the ion-exchange chromatography system according to the present invention, it is possible to separate and quantify two or more components such as PO₂F₂⁻ and BF₄⁻. In particular, in Examples 2 and 3 in which an SI-50 4E column was adopted and/or Na₂CO₃ was used with a concentration of 3.0 to 4.0 mM, it was confirmed that separation and quantification of four (4) components such as PO₂F₂⁻, BOB, BF₄⁻ and PF₆⁻ are possible. Further, as shown in FIG. 1, it was confirmed in Example 3 that ion peaks of PO₂F₂⁻, BOB, BF₄⁻ and PF₆⁻ in the final electrolyte product were clearly separated on spectrum and no additive interference was observed. Further, as shown in FIG. 2, it was confirmed in Example 5 that ion peaks of PO₂F₂⁻ and PF₆⁻ in the final electrolyte product were clearly separated on spectrum and no additive interference was observed, however, PF₆⁻ ion peaks or the like are difficult to identify.

Consequently, when an electrolyte is prepared by applying the ion-exchange chromatography system according to the present invention as in Examples 1 to 4, a plurality of lithium salts in a final electrolyte product can be quantified without interference of additives, as compared to conventional art such as Comparative Example 1. As a result, it was confirmed that an adjustment lead time may be greatly reduced, omission of intermediate inspection steps and adjustment of component ratio of the final electrolyte product are possible so as to greatly improve productivity, and analytical reliability and customer satisfaction are remarkably improved.

## Claims

1. An ion-exchange chromatography system for separating and quantifying a plurality of lithium salts included in an electrolyte, comprising:
an ion-exchange column; a mobile phase; and an electric conductivity detector,
wherein the mobile phase includes 1 to 10 millimolar concentration (mM) of sodium carbonate (NaCO₃), 0.5 to 8 millimolar concentration (mM) of sodium hydrogen carbonate (NaHCO₃), 15 to 40% by weight of acetonitrile (ACN), and the balance of water.

2. The system according to claim 1, wherein the lithium salts is two or more selected from the group consisting of LiPO₂F₂, LiBF₄, LiBOB and LiPF₆.

3. The system according to claim 1, wherein the ion-exchange column is an anion exchange column.

4. The system according to claim 3, wherein the anion exchange column includes a quaternary ammonium ligand in a stationary phase.

5. The system according to claim 4, wherein the anion exchange column is a SHODEX SI-50 4E.

6. The system according to claim 1, wherein the mobile phase includes 3.5 to 4.5 millimolar concentration (mM) of sodium carbonate (NaCO₃), 2.5 to 3.5 millimolar concentration (mM) of sodium hydrogen carbonate (NaHCO₃), 25 to 30% by weight of acetonitrile (ACN), and the balance of water.

7. A method for quantitative analysis of lithium salts in electrolyte, which includes:
i) preparing a standard electrolyte solution;
ii) calibrating the standard electrolyte solution using the ion-exchange chromatography system of claim 1; and
iii) quantifying an electrolyte sample using the ion-exchange chromatography system.

8. The method according to claim 7, wherein the electrolyte standard solution is produced by firstly mass-diluting an electrolyte reference solution by 5 to 15 times with an electrolyte solvent and then secondly mass-diluting the diluted solution by 30 to 300 times with a mobile phase.

9. The method according to claim 8, further comprising:
storing the diluted solution obtained by firstly mass-diluting the electrolyte reference solution at 4 °C or less.

10. The method according to claim 8, wherein the electrolyte reference solution includes two or more lithium salts selected from the group consisting of LiPO₂F₂, LiBF₄, LiBOB and LiPF₆.

11. The method according to claim 8, wherein the electrolyte solvent includes one or more selected from the group consisting of ethylene carbonate (EC), diethyl carbonate (DEC), dimethyl carbonate (DMC) and ethylmethyl carbonate (EMC) .

12. The method according to claim 7, wherein the electrolyte standard solution further comprises one or more selected among silyl borate-based compounds and organic halophosphino-based compounds.

13. The method according to claim 7, wherein the electrolyte sample is obtained by mass-diluting an electrolyte by 500 to 1500 times with the mobile phase.

14. The method according to claim 7, wherein components contained in the standard electrolyte solution are the same as components included in the electrolyte sample.

15. A method for manufacturing electrolyte, comprising the ion-exchange chromatography system according to any one of claims 1 to 6.
